# EUROPÄISCHE PATENTSCHRIFT

(11) **EP 0 662 277 B1**
(45) Veröffentlichungstag und Bekanntmachung des Hinweises auf die Patenterteilung: **02.04.1997**
(21) Anmeldenummer: 93918986.6
(22) Anmeldetag: 13.09.1993
(51) Int. Cl.: H05B 41/29, H05B 41/38

(54) **GETAKTETE STROMVERSORGUNGSSCHALTUNG**
CLOCKED CURRENT SUPPLY CIRCUIT
CIRCUIT CADENCE D'ALIMENTATION EN COURANT

(30) Priorität: 24.09.1992 DE 4231968
(43) Veröffentlichungstag der Anmeldung: 12.07.1995
(73) Patentinhaber: ROBERT BOSCH GMBH, 70442 Stuttgart (DE)
(72) Erfinder: GEORGE, Tobias, D-76744 Wörth am Rhein (DE); WOLF, Hans-Georg, D-77833 Ottersweier/Hatzenweier (DE); SCHLIENZ, Ulrich, D-77805 Lichtenstein (DE)
(86) Internationale Anmeldenummer: DE9300849
(87) Internationale Veröffentlichungsnummer: WO9407345

(56) Entgegenhaltungen:
- EP-A- 0 485 866
- EP-A- 0 516 377
- DE-A- 4 015 400
- FR-A- 2 489 069

## Beschreibung

### Stand der Technik

Die Erfindung geht aus von einer getakteten Stromversorgungsschaltung nach der Gattung des Hauptanspruchs. Aus dem Fachbuch von U. Tietze und CH. Schenk, "Halbleiterschaltungstechnik", 6. Auflage, Springer-Verlag 1983, S. 545 bis 552 sind Schaltbeispiele von getakteten Stromversorgungsschaltungen bekannt, die jeweils wenigstens ein induktives Element und eine Steueranordnung enthalten. Die Steueranordnung stellt in Abhängigkeit von einem ausgangsseitig vorhandenen Lastzustand Schaltsignale für Schaltmittel bereit. Die Steueranordnung ist in einem Regelkreis enthalten, der die Aufgabe hat, die Ausgangsspannung oder den Ausgangsstrom der getakteten Stromversorgungsschaltung wenigstens näherungsweise konstant zu halten. Auf eine Änderung des Lastzustands reagiert der Regelkreis mit einer systembedingten Einschwingzeit. Eine Änderung des Lastzustands tritt insbesondere im Einschaltmoment von elektrischen Verbrauchern auf. Eine Gasentladungslampe stellt in dieser Hinsicht eine besonders kritische Last dar. Bei einer Gasentladungslampe, insbesondere bei einer Hochdruck-Gasentladungslampe, muß eine rasche Energiezufuhr nach dem Einleiten des Zündvorgangs sichergestellt werden, damit die Lampe nicht sofort wieder erlischt.

Aus dem DE-U 90 15 674.9 (=EP-A-485 866), das dem Oberbegriff des Anspruchs 1 zugrundeliegt, ist eine getaktete Stromversorgungsschaltung bekannt, die diese Aufgabe gemäß einem ersten Ausführungsbeispiel mit einer ausgangsseitig vorgesehenen Reihenschaltung von einem Kondensator mit einer Spule löst. Die im Kondensator gespeicherte kapazitive Energie stellt einen raschen Energienachschub nach dem Einleiten des Zündvorgangs der Gasentladungslampe sicher. Die Spule begrenzt die zeitliche Stromänderung auf einen vorgegebenen Wert und verhindert damit eine schlagartige Entladung des Kondensators. Die hohen Anforderungen an die Spule und an den Kondensator sowohl hinsichtlich Spannungsfestigkeit und zulässigem Maximalstrom als auch hinsichtlich zeitlicher Spannungsänderung und zeitlicher Stromänderung machen den Einsatz von hochwertigen Bauelementen erforderlich, die entsprechend teuer sind.

Der Erfindung liegt die Aufgabe zugrunde, eine getaktete Stromversorgungsschaltung anzugeben, die eine schnelle Reaktion auf eine Änderung des Lastzustands ermöglicht.

Die Aufgabe wird durch die im Anspruch 1 angegebenen Merkmale gelöst.

### Vorteile der Erfindung

Die erfindungsgemäß vorgesehene Maßnahme, ausgangsseitig eine vom Verbraucher unabhängige, zumindest zeitweise wirksame Last vorzusehen, ermöglicht eine Energiespeicherung im induktiven Element der Stromversorgungsschaltung, so daß ein zusätzliches Bauelement entfällt. Die gespeicherte induktive Energie steht bei Bedarf sofort bereit. Die zumindest zeitweise wirksame Last ermöglicht das Betreiben der Stromversorgungsschaltung unabhängig vom Zustand des elektrischen Verbrauchers bis zur Vollast, so daß ein systembedingter Einschwingvorgang vom Leerlaufbetrieb bis zum Vollastbetrieb entfällt.

Die erfindungsgemäß vorgesehene getaktete Stromversorgungsschaltung eignet sich insbesondere zur Energieversorgung von Hochdruck-Gasentladungslampen, die nach dem Einleiten des Zündvorgangs einen gegenüber dem stationären Betriebszustand erhöhten Leistungsbedarf aufweisen, wobei die erhöhte Leistung unmittelbar nach dem Einleiten des Zündvorgangs aufgebracht werden muß.

Vorteilhafte Weiterbildungen und Verbesserungen der erfindungsgemäßen getakteten Stromversorgungsschaltung ergeben sich aus Unteransprüchen.

Eine vorteilhafte Weiterbildung sieht das Wirksamwerden der Last in Abhängigkeit von der Ausgangsspannung der Stromversorgungsschaltung vor. In dieser Ausgestaltung kann die Last mittels eines Komparators, dem vorzugsweise eine Schalthysterese zugeordnet ist, ein- und ausgeschaltet werden.

Als wenigstens zeitweise wirksame Last ist beispielsweise ein Transistor, vorzugsweise ein Feldeffekttransistor vorgesehen, der sowohl eine kontinuierliche Lastzuschaltung als auch eine diskrete Lastzuschaltung im Ein- und Ausbetrieb ermöglicht. Vorzugsweise ist in Serie zu dem Transistor ein ohmscher Widerstand geschaltet, der den wesentlichen Teil der auftretenden Verlustleistung übernimmt.

Eine andere vorteilhafte Ausgestaltung sieht als Last eine Begrenzerdiode vor, die beim Überschreiten der Schwellenspannung die Ausgangsspannung der Stromversorgungsschaltung einerseits begrenzt und andererseits gleichzeitig als Last wirkt.

Weitere vorteilhafte Weiterbildungen und Verbesserungen der erfindungsgemäßen getakteten Stromversorgungsschaltung ergeben sich aus weiteren Unteransprüchen in Verbindung mit der folgenden Beschreibung.

### Zeichnung

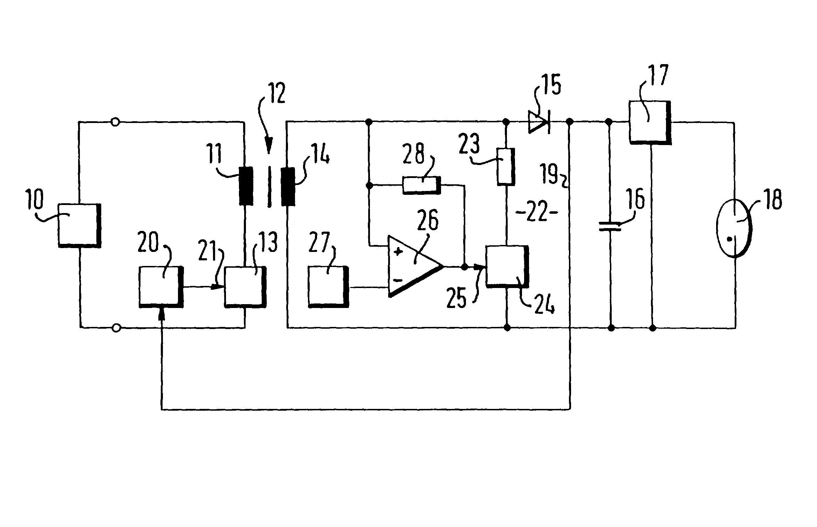

In der Figur ist ein Schaltbild einer erfindungsgemäßen getakteten Stromversorgungsschaltung gezeigt.

Eine Energiequelle 10 ist mit einer Reihenschaltung verbunden, die eine Primärwicklung 11 eines Übertragers 12 und Schaltmittel 13 enthält. Eine Sekundärwicklung 14 des Übertragers 12 ist über eine Gleichrichterdiode 15 mit einem Glättungskondensator 16 verbunden. Parallel zum Glättungskondensator 16 ist eine Zündschaltung 17 geschaltet, an der eine Gasentladungslampe 18 angeschlossen ist. Am Glättungskondensator 16 ist eine Rückführungsleitung 19 angeschlossen, die zu einer Steueranordnung 20 führt, welche ein Schaltsignal 21 an die Schaltmittel 13 abgibt.

Die Sekundärwicklung 14 des Übertragers 12 ist mit einer Last 22 verbunden, die eine Reihenschaltung eines Widerstands 23 mit einem variablen Lastteil 24 enthält. Der variable Lastteil 24 erhält ein Steuersignal 25 von einem Komparator 26, der die an der Sekundärwicklung 14 auftretende Spannung mit einer von einer Referenzspannungsquelle 27 abgegebenen Referenzspannung vergleicht. Dem Komparator 26 ist ein Mitkopplungswiderstand 28 zugeordnet.

Die Funktion der erfindungsgemäßen getakteten Stromversorgungsschaltung wird anhand des in der Figur gezeigten Schaltbilds näher erläutert:

Der Übertrager 12, die Schaltmittel 13, die Steueranordnung 20, die Gleichrichterdiode 15 sowie der Glättungskondensator 16 sind wesentliche Komponenten einer Sperrwandlerschaltung, die hier beispielhaft als getaktete Stromversorgungsschaltung zugrunde gelegt wird. Die getaktete Stromversorgungsschaltung hat die Aufgabe, die von der Energiequelle 10 bereitgestellte elektrische Energie zur Versorgung eines elektrischen Verbrauchers 18, hier speziell der Gasentladungslampe, geeignet aufzubereiten. In vielen Fällen ist das unterschiedliche Spannungsniveau zwischen Energiequelle 10 und elektrischem Verbraucher 18 auszugleichen. Im gezeigten Ausführungsbeispiel ist das Spannungsübersetzungsverhältnis vom Übersetzungsverhältnis des Übertragers 12 festgelegt.

Die Schaltmittel 13, beispielsweise ein Transistor, vorzugsweise ein Feldeffekttransistor, ermöglicht während der vom Schaltsignal 21 vorgegebenen Leitphase einen Aufbau magnetischer Energie in der Primärwicklung 11 des Übertragers 12. Die Polarität der Sekundärwicklung 14 ist derart gewählt, daß während dieser Phase die Gleichrichterdiode 15 gesperrt ist. Während der anschließenden Sperrphase der Schaltmittel 13 wird die in der Primärwicklung 11 gespeicherte magnetische Energie zur Sekundärwicklung 14 übertragen und ausgangsseitig sowohl im Glättungskondensator 16 als kapazitive Energie gespeichert als auch an den Verbraucher 18 abgegeben. Das Schaltsignal 21 wird von der Steueranordnung 20 in Abhängigkeit von der am Glättungskondensator 16 auftretenden Ausgangsspannung festgelegt. Falls eine Potentialtrennung zwischen Ausgangsseite und Eingangsseite gewünscht wird, kann in der zwischen dem Glättungskondensator 16 und der Steueranordnung 20 liegenden Rückführungsleitung 19 eine Potentialtrennvorrichtung, beispielsweise ein Optokoppler vorgesehen werden. Wesentlich ist, daß die Steueranordnung 20 eine Information über den gerade vorliegenden Lastzustand erhält und in Abhängigkeit davon beispielsweise die Frequenz, vorzugsweise jedoch das Impuls-zu-Pausenverhältnis des Schaltsignals 21 festlegt. Die Rückführungsleitung 19, die im gezeigten Ausführungsbeispiel am ausgangsseitigen Glättungskondensators 16 angeschlossen ist, kann auch an der Primärwicklung 11 des Übertragers 12 bei geringeren Genauigkeitsanforderungen an die vorzugebende Ausgangsspannung angeschlossen sein, weil an der Primärwicklung des Übertragers 11 während der Sperrphase der Schaltmittel 13 die mit dem Kehrwert des Übersetzungsfaktors multiplizierte, an der Sekundärwicklung 14 des Überträgers 12 auftretende Spannung abfühlbar ist.

Zur Zündung der im Ausführungsbeispiel als elektrischer Verbraucher vorgesehenen Gasentladungslampe 18 ist die Zündschaltung 17 vorgesehen, die einen Zündimpuls beispielsweise mittels eines Übertragers in die Zuleitung zur Gasentladungslampe 18 einkoppelt. Die Zündschaltung 17 ist nicht näher dargestellt, weil sie für die Funktion keine weitere Bedeutung hat. Die Zündschaltung 17 kann beispielsweise durch ein externes Triggersignal zu einer Zündimpulsabgabe veranlaßt werden. Bei dem in der Figur gezeigten Ausführungsbeispiel gibt die Zündschaltung 17 beispielsweise nach dem Erreichen einer vorgegebenen Spannung am Glättungskondensator 16 nach der erstmaligen Inbetriebnahme der Schaltungsanordnung einen Zündimpuls ab.

Die Kapazität des Glättungskondensators 16 ist auf einen Wert festgelegt, der eine ausreichende Glättung der Spannung während des stationären Betriebs in der Gasentladungslampe 18 sicherstellt. Die im Glättungskondensator 16 gespeicherte kapazitive Energie reicht dann aber für die nach dem Einleiten des Zündvorgangs in kurzer Zeit benötigte erhöhte Energie zum sicheren Beenden des Zündvorgangs der Gasentladungslampe 18, insbesondere wenn es sich um eine Hochdruck-Gasentladungslampe handelt, nicht aus. Erfindungsgemäß ist deshalb die wenigstens zeitweise wirksame Last 22 vorgesehen, die dafür sorgt, daß diese kurzfristig benötigte erhöhte Leistung aus der in der Sekundärwicklung 14 des Übertragers 12 gespeicherte induktive Energie in der erforderlichen Schnelligkeit zur Verfügung gestellt werden kann. Der Last 22 kommt die Aufgabe zu, die getaktete Stromversorgungsschaltung derart zu belasten, daß zumindest dann, wenn der erhöhte kurzfristige Energiebedarf besteht, in dem wenigstens einen induktiven Element, im gezeigten Ausführungsbeispiel dem Übertrager 12, eine gespeicherte induktive Energie bereitsteht. Diese Maßnahme ersetzt mittels des ohnehin vorhandenen induktiven Elements 12 weitere oder zumindest teurere Komponenten, die zur Energiespeicherung ansonsten vorgesehen sein müßten.

Im beschriebenen Ausführungsbeispiel wird die Last 22 in Abhängigkeit von der an der Sekundärwicklung 14 des Übertragers 12 auftretenden Spannung wirksam. Der Komparator 26, beispielsweise ein speziell ausgelegter Operationsverstärker, vergleicht die an der Sekundärwicklung 14 auftretende Spannung mit der von der Referenzspannungsquelle 27 abgegebenen Referenzspannung. Übersteigt die an der Sekundärwicklung 14 auftretende Spannung die Referenzspannung, dann gibt der Komparator 26 das Steuersignal 25 an den variablen Lastteil 24 ab. Unterschreitet danach die Spannung an der Sekundärwicklung wieder die Referenzspannung, dann wird das Steuersignal 25 wieder geändert. Zur Vermeidung von Schwingungsvorgängen ist der Mitkopplungswiderstand 28 vorgesehen, der dem Komparator 26 eine vorgebbare Hysterese verleiht.

Der variable Lastteil 24 ist beispielsweise ein Transistor, vorzugsweise eine Feldeffekttransistor. Der Transistor wird mit dem vom Komparator 26 abgegebenen Steuersignal 25 geöffnet oder geschlossen. Der in den Schließphasen durch den Transistor fließende Strom wird durch die Induktivität der Sekundärwicklung 14 begrenzt. Falls ein vollständiges Kurzschließen der Sekundärwicklung 14, insbesondere mit Blick auf die Rückwirkung in den Primärkreis, nicht möglich ist, kann der Widerstand 23 vorgesehen sein, mit dem eine weitere Strombegrenzung vorgebbar ist. Bei entsprechender Auslegung kann der Widerstand 23 fast die gesamte Ausgangsleistung als Verlustenergie in Wärme umsetzen. Anstelle des bislang beschriebenen Schaltbetriebs des variablen Lastteils 24 mittels des Komparators 26 ist auch eine analoge stufenlose Wirksammachung der Last 22 realisierbar.

Im beschriebenen Ausführungsbeispiel wird die Last 22 stets in Abhängigkeit von der Spannung an der Sekundärwicklung 14 wirksam. Ein Leerlauf der Stromversorgungsschaltung tritt bei diesem Ausführungsbeispiel somit nicht auf. In einer anderen Ausgestaltung kann anstelle der Abhängigkeit von der Ausgangsspannung ein externes Steuersignal vorgesehen sein, das dem Steuersignal 25 entspricht.

Die Last 22 ist mittels der Gleichrichterdiode 15 vom Glättungskondensator 16 immer dann entkoppelt, wenn die Spannung an der Last 22 unter die am Glättungskondensator 16 liegende Spannung zuzüglich der Diodendurchlaß-Spannung der Gleichrichterdiode 15 liegt. Der Glättungskondensator 16 wird daher beim Wirksamwerden der Last 22 nicht entladen. Unter Zugrundelegung eines anderen Typs einer getakteten Stromversorgungsschaltung ist es ohne weiteres möglich, die Last 22 mit dem Ausgang unmittelbar zu verbinden. Die Last 22 ist ebenfalls bei getakteten Stromversorgungsschaltungen vorsehbar, die einen Wechselspannungsausgang aufweisen.

## Patentansprüche

1. Getaktete Stromversorgung mit einer Steueranordnung (20), die in Abhängigkeit von einem ausgangsseitig vorhandenen Lastzustand Schaltsignale (21) für ein erstes Schaltmittel (13) bereitstellt, mit wenigstens einem induktiven Element (12), mit einer Gasentladungslampe (18) als erste Last und mit einer von der Gasentladungslampe (18) unabhängigen zweiten Last (22), die die getaktete Stromversorgungsschaltung zumindest bis zur Zündung der Gasentladungslampe (18) belastet, damit im induktiven Element (12) eine Energie gespeichert ist, die der Gasentladungslampe (18) beim Zündvorgang unmittelbar zur Verfügung steht, dadurch gekennzeichnet, daß die zweite Last (22) von einem Steuersignal (25) über zumindest ein zweites Schaltmittel (24) schaltbar ist.

2. Getaktete Stromversorgungsschaltung nach Anspruch 1, dadurch gekennzeichnet, daß die zweite Last (22) in Abhängigkeit von einer ausgangsseitig auftretenden Spannung wirksam ist.

3. Getaktete Stromversorgungsschaltung nach Anspruch 2, dadurch gekennzeichnet, daß ein Komparator (26) zum Vergleich einer ausgangsseitig auftretenden Spannung mit einer von einer Referenzspannungsquelle (27) abgegebenen Referenzspannung vorgesehen ist.

4. Getaktete Stromversorgung nach Anspruch 1, dadurch gekennzeichnet, daß als zweites Schaltmittel (24) ein Transistor, vorzugsweise ein Feldeffekttransistor, enthalten ist.

5. Getaktete Stromversorgungsschaltung nach Anspruch 1, dadurch gekennzeichnet, daß die zweite Last einen Widerstand (23) zum Aufnehmen der Verlustleistung enthält.

6. Getaktete Stromversorgungsschaltung nach einem der vorhergehenden Ansprüche, gekennzeichnet durch die Verwendung in einem Vorschaltgerät zur Energieversorgung von Gasentladungslampen, insbesondere von Hochdruck-Gasentladungslampen.

7. Getaktete Stromversorgungsschaltung nach Anspruch 6, dadurch gekennzeichnet, daß die Gasentladungslampe 18 in einem Kraftfahrzeug angeordnet ist.

## Claims

1. Clocked power supply having a control arrangement (20) which provides switching signals (21) for a first switching means (13) as a function of a load condition present on the output side, having at least one inductive element (12), having a gas discharge lamp (18) as the first load and having a second load (22) which is independent of the gas discharge lamp (18) and loads the clocked power supply circuit, at least until ignition of the gas discharge lamp (18), so that energy is stored in the inductive element (12) and is immediately available to the gas discharge lamp (18) during the ignition process, characterized in that the second load (22) can be switched by a control signal (25) via at least one second switching means (24).

2. Clocked power supply circuit according to Claim 1, characterized in that the second load (22) is active as a function of a voltage occurring on the output side.

3. Clocked power supply circuit according to Claim 2, characterized in that a comparator (26) is provided for the purpose of comparing a voltage occurring on the output side with a reference voltage output by a reference voltage source (27).

4. Clocked power supply according to Claim 1, characterized in that a transistor, preferably a field effect transistor, is included as the second switching means (24).

5. Clocked power supply circuit according to Claim 1, characterized in that the second load includes a resistor (23) for absorbing the power loss.

6. Clocked power supply circuit according to one of the preceding claims, characterized by use in a ballast for the energy supply of gas discharge lamps, in particular of high-pressure gas discharge lamps.

7. Clocked power supply circuit according to Claim 6, characterized in that the gas discharge lamp (18) is arranged in a motor vehicle.

## Revendications

1. Alimentation cadencée en courant avec un dispositif de commande (20), qui met à disposition d'un premier dispositif de commutation (13) des signaux de commande (21) en fonction d'un état de charge existant du côté de la sortie, avec au moins un élément d'induction (12), avec une lampe luminescente à gaz (18) comme première charge et avec une seconde charge (22) indépendante de la lampe luminescente à gaz (18), charge qui charge le circuit cadencé d'alimentation en courant au moins jusqu'à l'allumage de la lampe luminescente à gaz (18), afin d'accumuler de l'énergie dans un élément inductif (12), énergie qui est immédiatement disponible lors du processus d'allumage pour la lampe luminescente à gaz (18),
caractérisée en ce que
la seconde charge (22) peut être branchée par un signal de commande (25) grâce à au moins un second dispositif de commutation (24) .

2. Circuit cadencé d'alimentation en courant selon la revendication 1,
caractérisé en ce que
la seconde charge (22) est active en fonction d'une tension se produisant du côté de la sortie.

3. Circuit cadencé d'alimentation en courant selon la revendication 2,
caractérisé en ce que
un comparateur (26) est prévu pour comparer une tension se produisant du côté de la sortie avec une tension de référence délivrée par une source de tension de référence.

4. Circuit cadencé d'alimentation en courant selon la revendication 1,
caractérisé en ce que
il contient en tant que second dispositif de commutation (24) un transistor, de préférence un transistor à effet de champ.

5. Circuit cadencé d'alimentation en courant selon la revendication 1,
caractérisé en ce que
la seconde charge contient une résistance (23) pour recevoir la puissance dissipée.

6. Circuit cadencé d'alimentation en courant selon l'une des revendications précédentes,
caractérisé par
son utilisation dans un ballast pour l'alimentation de lampes à décharge à gaz, en particulier de lampes à décharge à gaz à haute pression.

7. Circuit cadencé d'alimentation en courant selon la revendication 6,
caractérisé en ce que
la lampe luminescente à gaz (18) est disposée dans un véhicule automobile.
